# EUROPEAN PATENT APPLICATION

(11) **EP 4 721 897 A1**
(43) Date of publication of application: **08.04.2026**
(21) Application number: 24815529.3
(22) Date of filing: 29.05.2024
(51) Int. Cl.: B22F 10/22, B22F 12/00, B22F 12/20, B22F 12/90, B23K 26/03, B23K 26/21, B23K 26/34, B23K 26/70, B29C 64/25, B29C 64/153, B29C 64/393, B33Y 30/00, B33Y 50/02

(54) **ADDITIVE PROCESSING DEVICE, CONTROL METHOD FOR ADDITIVE PROCESSING DEVICE, AND CONTROL PROGRAM FOR ADDITIVE PROCESSING DEVICE**

(30) Priority: 30.05.2023 JP 2023088400
(71) Applicant: DMG Mori Co., Ltd., Yamatokoriyama-shi, Nara 639-1160 (JP)
(72) Inventor: OTAWA, Takeshi, Yamatokoriyama-shi, Nara 639-1160 (JP)
(74) Representative: Isarpatent
(86) International application number: PCT/JP2024/019730
(87) International publication number: WO 2024/248048

(57) **Abstract**

An additive manufacturing apparatus (100) capable of performing additive manufacturing by supplying a powder material to a workpiece and irradiating the workpiece with a laser beam includes a cover body (130) defining a machining area (AR) in which additive manufacturing is performed on the workpiece, a window (WD) provided in the cover body (130), and a shutter (150) provided on the machining area (AR) side of the window (WD) and configured to be openable and closable with respect to the window (WD). A reflector (RF) for reflecting the laser beam is provided on a surface on the machining area (AR) side of the shutter (150).

## Description

### Technical Field

The present disclosure relates to an additive manufacturing apparatus, a method for controlling an additive manufacturing apparatus, and a control program for controlling an additive manufacturing apparatus.

### Background Art

JP 2018-94689A (Patent Document 1) discloses a machine tool provided with a see-through window. An operator can monitor a machining area inside the machine tool through the see-through window.

### Citation List

### Patent Document

Patent Document 1: JP 2018-94689A

### Summary of Invention

### Technical Problem

Incidentally, additive manufacturing apparatuses capable of performing additive manufacturing on a workpiece have become prevalent. An additive manufacturing apparatus performs additive manufacturing by supplying a powder material to a workpiece and irradiating the workpiece with a laser beam. The machine tool disclosed in Patent Document 1 performs subtractive manufacturing on a workpiece and does not perform additive manufacturing.

When the workpiece has a high reflectance, the laser beam may be reflected by the workpiece and strike the window of the additive manufacturing apparatus without being sufficiently attenuated. Naturally, the window is designed based on safety standards for the use of a laser beam as stipulated in industrial standards and the like. Therefore, the laser beam will not leak outside and shine on an operator, but the window of the additive manufacturing apparatus may be damaged. As a result, the additive manufacturing apparatus cannot be operated until the damaged window is replaced, resulting in a decrease in the operating rate and productivity of the additive manufacturing apparatus. Therefore, there is a demand for a technique for preventing damage to windows provided in additive manufacturing apparatuses.

### Solution to Problem

In an example of the present disclosure, an additive manufacturing apparatus configured to perform additive manufacturing by supplying a powder material to a workpiece and irradiating the workpiece with a laser beam is provided. The additive manufacturing apparatus includes a cover body defining a machining area in which additive manufacturing is performed on the workpiece, a window provided in the cover body, and a shutter provided on a machining area side of the window and configured to be openable and closable with respect to the window. A reflector configured to reflect the laser beam is provided on a surface on the machining area side of the shutter.

In an example of the present disclosure, the additive manufacturing apparatus further includes a control unit configured to control opening and closing of the shutter. The control unit executes processing for closing the shutter before additive manufacturing of the workpiece is started.

In an example of the present disclosure, the control unit executes processing for opening the shutter after the additive manufacturing of the workpiece is completed.

In an example of the present disclosure, the additive manufacturing apparatus further includes a camera configured to capture an image of the machining area.

In an example of the present disclosure, the reflector has a cutout portion. The camera is disposed such that the camera fits into the cutout portion when the shutter is closed.

In an example of the present disclosure, a portion or an entirety of the reflector is inclined with respect to a vertical direction.

In an example of the present disclosure, the portion or the entirety of the reflector is inclined such that the laser beam is reflected toward a ceiling side of the cover body.

In an example of the present disclosure, the additive manufacturing apparatus is further configured to perform subtractive manufacturing on the workpiece. The machining area is provided with a discharge mechanism configured to discharge a coolant onto the workpiece, and a tank into which the coolant discharged onto the workpiece flows. The portion or the entirety of the reflector is inclined such that the laser beam is reflected toward a floor side of the cover body.

In an example of the present disclosure, the reflector is constituted by a copper plate.

In another example of the present disclosure, provided is a method for controlling an additive manufacturing apparatus configured to perform additive manufacturing by supplying a powder material to a workpiece and irradiating the workpiece with a laser beam. The additive manufacturing apparatus includes a cover body defining a machining area in which additive manufacturing is performed on the workpiece, a window provided in the cover body, and a shutter provided on a machining area side of the window and configured to be openable and closable with respect to the window. A reflector configured to reflect the laser beam is provided on a surface on the machining area side of the shutter. The control method includes a step for closing the shutter before additive manufacturing of the workpiece is started.

In another example of the present disclosure, provided is a control program for controlling an additive manufacturing apparatus configured to perform additive manufacturing by supplying a powder material to a workpiece and irradiating the workpiece with a laser beam. The additive manufacturing apparatus includes a cover body defining a machining area in which additive manufacturing is performed on the workpiece, a window provided in the cover body, and a shutter provided on a machining area side of the window and configured to be openable and closable with respect to the window. A reflector configured to reflect the laser beam is provided on a surface on the machining area side of the shutter. The control program causes the additive manufacturing apparatus to execute a step of closing the shutter before additive manufacturing of the workpiece is started.

These and other objects, features, aspects, and advantages of the present invention will become apparent from the following detailed description of the invention, taken in conjunction with the accompanying drawings.

### Brief Description of Drawings

FIG. 1 is a diagram showing an example of the appearance of an additive manufacturing apparatus.
FIG. 2 is a diagram showing an example of an apparatus configuration of the additive manufacturing apparatus.
FIG. 3 shows a cross-sectional view of a laser head during additive manufacturing.
FIG. 4 is a diagram showing a portion of the aforementioned cover body from the machining area side.
FIG. 5 is a diagram showing a portion of the aforementioned cover body from the machining area side.
FIG. 6 is a diagram showing a portion of the aforementioned cover body from the machining area side.
FIG. 7 is a diagram showing a cross section of the additive manufacturing apparatus along a vertical plane orthogonal to a window.
FIG. 8 is a schematic diagram showing an example of a coolant mechanism provided in the additive manufacturing apparatus.
FIG. 9 is a diagram showing an example of a drive mechanism of the additive manufacturing apparatus.
FIG. 10 is a diagram showing an example of a hardware configuration of a control unit.
FIG. 11 is a flowchart showing a flow of an additive manufacturing process performed by the additive manufacturing apparatus.

### Description of Embodiments

Hereinafter, embodiments of the present invention will be described with reference to the drawings. In the following description, parts and constituent elements that are the same are denoted by the same reference numerals. They also have the same names and functions. Therefore, detailed description thereof will not be repeated. Note that the embodiments and the variations described below may be selectively combined as appropriate.

### <A. Appearance of additive manufacturing apparatus 100>

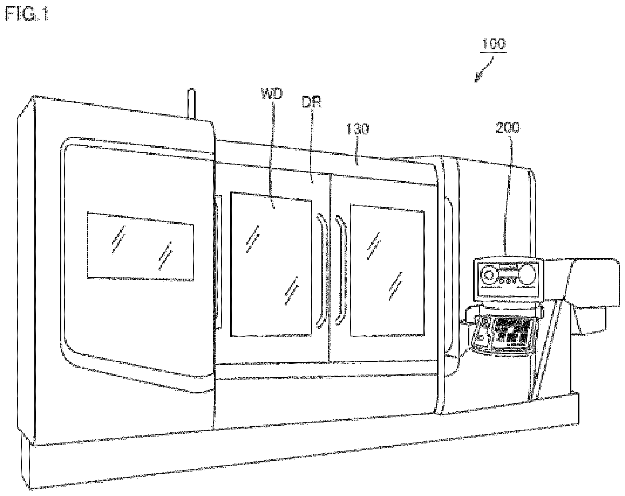

First, an additive manufacturing apparatus 100 according to an embodiment will be described with reference to FIG. 1. FIG. 1 is a diagram showing an example of the appearance of the additive manufacturing apparatus 100.

The additive manufacturing apparatus 100 is a processing machine capable of performing additive manufacturing (AM) on a workpiece. The additive manufacturing apparatus 100 performs additive manufacturing by supplying a powder material to the workpiece and irradiating the workpiece with a laser beam.

The additive manufacturing apparatus 100 may be a processing machine capable of performing not only additive manufacturing on a workpiece, but also subtractive manufacturing (SM) on the workpiece. Examples of a subtractive manufacturing function include a milling function and a turning function.

The additive manufacturing apparatus 100 includes, for example, a cover body 130 and an operation panel 200.

The cover body 130 is a mechanism for protecting parts provided inside the additive manufacturing apparatus 100. The cover body 130 is provided with a door DR. The door DR is, for example, a sliding door. The door DR may be configured to be openable and closable by a drive source such as a motor, or may be configured to be manually openable and closable.

The door DR is provided with a window WD. An operator can check the state of the machining area inside the additive manufacturing apparatus 100 through the window WD.

Note that in the example shown in FIG. 1, the window WD is provided in the door DR, but the window WD may be provided in a portion other than the door DR. Also, the number of windows WD provided in the cover body 130 may be one or more.

The operation panel 200 is a general-purpose computer and has a display for displaying various types of information regarding machining. The display may be, for example, a liquid crystal display, an organic EL (Electro Luminescence) display, or another type of display device. The display also includes a touch panel and receives various operations performed on the additive manufacturing apparatus 100 through touch operations.

### <B. Apparatus configuration of additive manufacturing apparatus 100>

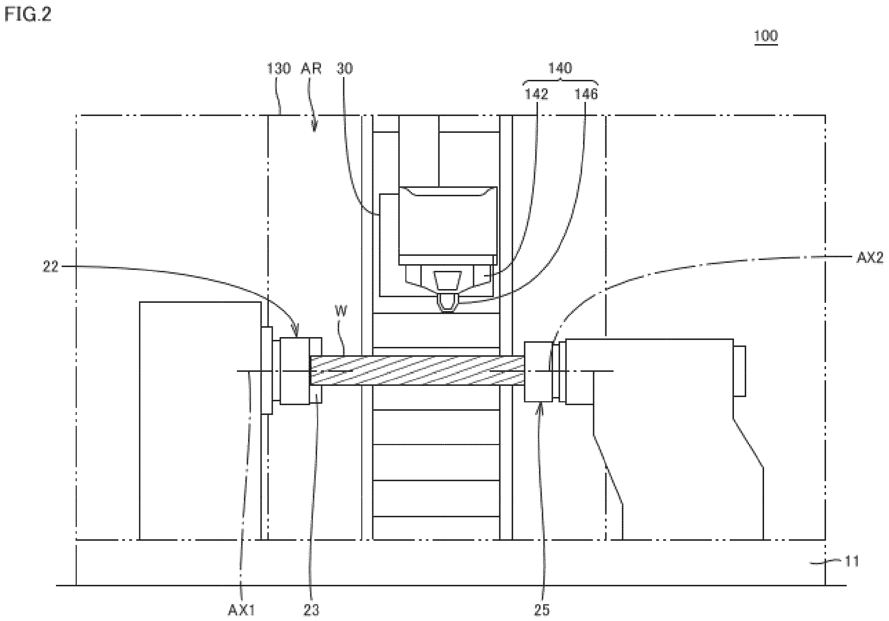

Next, an apparatus configuration of the additive manufacturing apparatus 100 will be described with reference to FIG. 2. FIG. 2 is a diagram showing an example of the apparatus configuration of the additive manufacturing apparatus 100.

As described above, the additive manufacturing apparatus 100 includes the cover body 130. The cover body 130 forms the exterior of the additive manufacturing apparatus 100, and defines a machining area AR in which additive manufacturing is performed on a workpiece W.

The additive manufacturing apparatus 100 includes a bed 11, a workpiece spindle 22, a tailstock 25, a tool spindle 30, and a laser head 140.

The bed 11 is a base member for supporting various apparatuses provided inside the additive manufacturing apparatus 100. In the example shown in FIG. 2, the bed 11 supports the workpiece spindle 22, the tailstock 25, and the laser head 140. The bed 11 is placed on the floor of a factory or the like. The bed 11 is made of a metal such as cast iron.

The workpiece spindle 22 is configured to be capable of rotating while holding the workpiece W. More specifically, the workpiece spindle 22 is provided with a chuck mechanism 23. The chuck mechanism 23 is a mechanism for fixing the workpiece W to the workpiece spindle 22. Also, the workpiece spindle 22 is configured to be rotatable around the axis AX1 extending along its axial direction.

The tailstock 25 is configured to be movable in the axis AX2 by various drive mechanisms such as a motor. As a result, the tailstock 25 supports an elongate workpiece W from the side opposite to the workpiece spindle 22. Typically, the axis AX2 is coaxial with the axis AX1. Also, the tailstock 25 is configured to be rotatable around the axis AX2. Note that a second workpiece spindle (not shown) may be provided, instead of the tailstock 25. The second workpiece spindle is provided opposite to the workpiece spindle 22 and is configured to be able to hold the workpiece W from the side opposite to the workpiece spindle 22.

The tool spindle 30 is provided, for example, at a position higher than the workpiece spindle 22 and the tailstock 25. Also, the tool spindle 30 is configured to allow a tool or the laser head 140 to be detachably attached. FIG. 2 shows an example in which the laser head 140 is attached to the tool spindle 30.

The laser head 140 can be attached to and detached from the tool spindle 30 by, for example, a dedicated attachment/detachment mechanism (not shown) for the laser head 140, which is separate from an ATC (Automatic Tool Changer) used for automatic replacement of cutting tools. The additive manufacturing apparatus 100 attaches the laser head 140 to the tool spindle 30 when performing additive manufacturing on the workpiece W. On the other hand, the additive manufacturing apparatus 100 attaches a tool to the tool spindle 30 when performing subtractive manufacturing on the workpiece W.

Examples of subtractive manufacturing include milling, in which a rotating tool is brought into contact with the workpiece W fixed to the workpiece spindle 22. Other examples of subtractive manufacturing include turning, in which a tool is pressed against a workpiece W rotating around the axis AX1.

The laser head 140 performs additive manufacturing through DED (Direct Energy Deposition) while attached to the tool spindle 30. The laser head 140 has a head body 142 and a laser nozzle 146 as a mechanism for realizing additive manufacturing.

A powder material is supplied to the head body 142 via a cable (not shown). The supplied powder material may be metal powder, resin powder, or any other type of powder that melts when irradiated with a laser beam.

The laser nozzle 146 emits a laser beam toward the workpiece W and determines an irradiation region of the workpiece W to be irradiated with the laser beam. The powder material supplied to the laser head 140 is discharged toward the workpiece W through the laser nozzle 146.

### <C. Additive manufacturing>

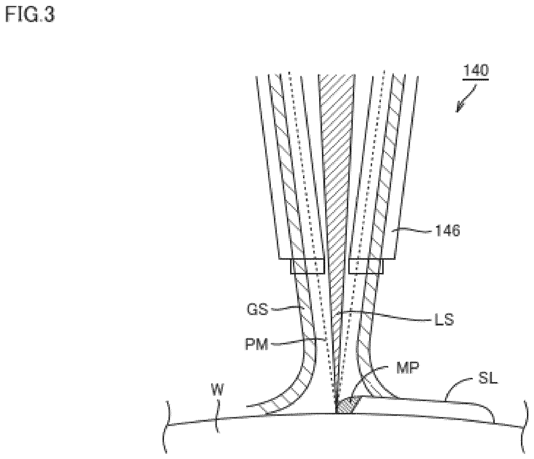

Next, additive manufacturing performed by the laser head 140 will be described in detail with reference to FIG. 3. FIG. 3 is a cross-sectional view of the laser head 140 during additive manufacturing.

While at least one of the laser head 140 and the workpiece W is being driven, the laser head 140 irradiates the surface of the workpiece W with a laser beam LS. As a result, the workpiece W melts in the portion irradiated with the laser beam LS, and a molten pool MP is formed on the surface of the workpiece W.

In parallel, the laser head 140 supplies a powder material PM to the molten pool MP. The powder material PM is guided to the molten pool MP by gas GS discharged from the laser head 140. As a result, the powder material PM melts and liquefies in the molten pool MP. Thereafter, the molten pool MP solidifies to form a layer SL on the workpiece W.

Note that the gas GS also functions as a shielding gas to prevent oxidation of the workpiece W, which is a stacked body.

### <D. Shutter mechanism>

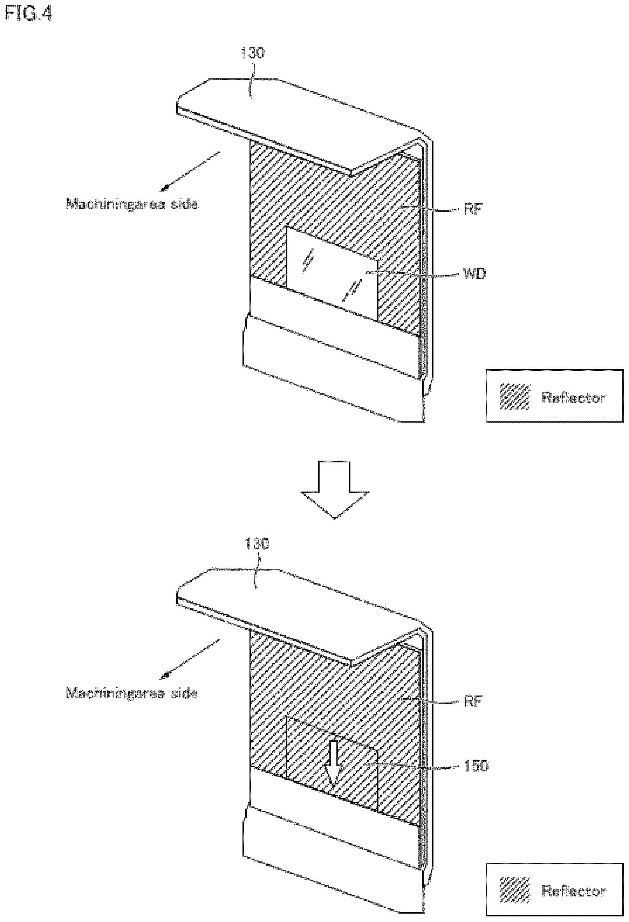

Next, a shutter mechanism provided in the machining area AR will be described with reference to FIG. 4. FIG. 4 is a diagram showing a portion of the aforementioned cover body 130 from the machining area AR side.

As described above, the laser head 140 supplies the powder material PM to the workpiece W during additive manufacturing and irradiates the workpiece surface with the laser beam LS. When the reflectance of the workpiece W is high, a high-intensity laser beam LS that is not sufficiently attenuated may be reflected by the workpiece W and strike the window WD provided in the cover body 130. If the laser beam LS strikes the window WD, the window WD may be damaged. The window WD is provided with a detection mechanism (not shown) that detects when the window WD is irradiated with the laser beam LS, and a safety mechanism is configured to stop the output of the laser beam LS from the laser head 140 as soon as it is detected that the window WD is irradiated with the laser beam LS. In other words, even if the surface on the machining area side of the window WD is irradiated with the laser beam LS and a portion of the window WD is thus damaged, the output of the laser beam LS from the laser head 140 is stopped at approximately that time, preventing emission to the outside of the window WD.

The window WD is provided with a shutter 150 to prevent damage to the window WD. The shutter 150 is configured to be openable and closable with respect to the window WD. The opening and closing directions of the shutter 150 are arbitrary. In the example shown in FIG. 4, the shutter 150 is configured to be openable and closable in the vertical direction.

The shutter 150 is provided on the machining area AR side of the window WD. In other words, the shutter 150 is provided inside the cover body 130.

A reflector RF for reflecting the laser beam LS is provided on the surface on the machining area AR side of the shutter 150. This prevents the laser beam LS reflected by the workpiece W from striking the window WD, thereby preventing damage to the window WD. Providing the reflector RF on the shutter 150 also prevents the shutter 150 from being damaged due to absorption of the energy of the high-intensity laser beam LS.

The reflector RF is made of any material capable of reflecting the laser beam LS. As an example, the reflector RF is constituted by a metal plate with high reflectance. Examples of the metal include copper and aluminum. As a result, the laser beam LS is more reliably reflected by the reflector RF, thereby preventing damage to the reflector RF. Also, the reflector RF may be made of a diffuse reflecting material that diffuses and reflects the laser beam LS.

Note that in the example shown in FIG. 4, the reflector RF is provided not only on the shutter 150 but also around the shutter 150, and it is sufficient that the reflector RF is provided at least on a portion of the shutter 150.

Preferably, the additive manufacturing apparatus 100 controls the opening and closing of the shutter 150 depending on whether the workpiece W is undergoing additive manufacturing.

As an example, the additive manufacturing apparatus 100 executes processing for closing the shutter 150 before additive manufacturing of the workpiece W is started. This allows the operator to check the state of the machining area AR before the shutter 150 is closed. On the other hand, after additive manufacturing of the workpiece is started, damage to the window WD is prevented.

More preferably, the additive manufacturing apparatus 100 executes processing for opening the shutter 150 after the additive manufacturing of the workpiece W is completed. This allows the operator to check the state of the machining area AR after additive manufacturing, and to check the finish of the workpiece W or the like.

### <E. Variation 1 of additive manufacturing apparatus 100>

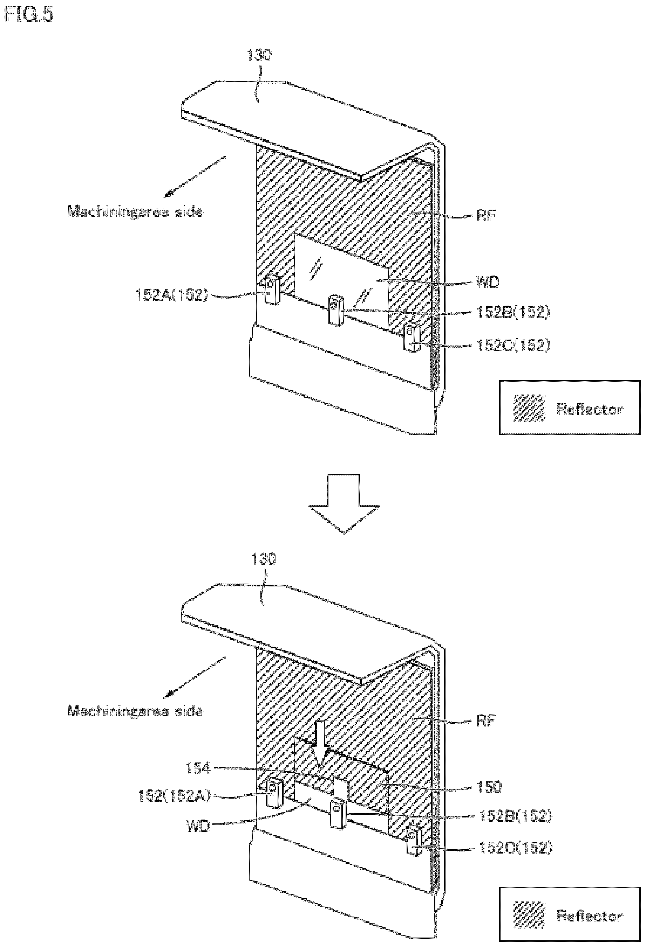

Next, Variation 1 of the additive manufacturing apparatus 100 will be described with reference to FIG. 5. FIG. 5 is a diagram showing a portion of the aforementioned cover body 130 from the machining area AR side.

The additive manufacturing apparatus 100 according to this variation further includes one or more cameras 152 for capturing images of the machining area AR. By providing the camera 152 on the additive manufacturing apparatus 100, the operator can check the state inside the machining area AR even when the shutter 150 is closed.

Note that the number of cameras 152 provided in the machining area AR may be one or more. In the example of FIG. 5, three cameras 152A to 152C are provided in the machining area AR. Hereinafter, the cameras 152A to 152C will also be referred to as the cameras 152 unless the cameras 152A to 152C particularly need to be distinguished from each other.

The images obtained from the cameras 152 are displayed on a display unit provided in the additive manufacturing apparatus 100. An example of the display unit is the display provided on the operation panel 200 described above (see FIG. 1). The image to be displayed may be a moving image or a still image.

Preferably, the cameras 152 are provided inside a protecting cover. The protecting cover accommodates the cameras 152 to cover portions of the cameras 152 other than the lenses. This makes it possible to prevent the cameras 152 from being damaged by the laser beam.

The cameras 152A to 152C are arranged in a row at the same height. Also, the cameras 152A to 152C are arranged such that their optical axes are parallel to each other. As a result, even if an elongate workpiece W is to be processed, images of the entire workpiece W are captured.

Preferably, the cameras 152A to 152C are provided on the cover body 130 to capture images of the workpiece W in the machining area AR from the window WD side. More specifically, at least one of the cameras 152 is disposed such that a portion or the entirety of the camera 152 overlaps the window WD. This allows the camera 152 to capture images of the machining area AR from the same viewpoint as when the operator looks through the window WD.

When the camera 152 is disposed to overlap the window WD, the shutter 150 will overlap the camera 152 when the shutter 150 is closed. In view of this, in this example, a cutout portion 154 is formed in the shutter 150. The camera 152 is disposed such that the camera 152 fits into the cutout portion 154 when the shutter 150 is closed. This enables the shutter 150 to cover the window WD without overlapping the camera 152 even when the shutter 150 is closed.

Note that in the example shown in FIG. 5, one cutout portion 154 is formed in the shutter 150, but the number of cutout portions 154 corresponds to the number of cameras 152 that overlap the window WD.

### <F. Variation 2 of additive manufacturing apparatus 100>

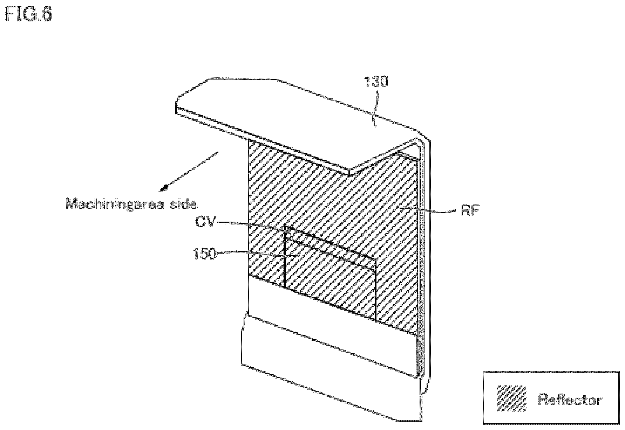

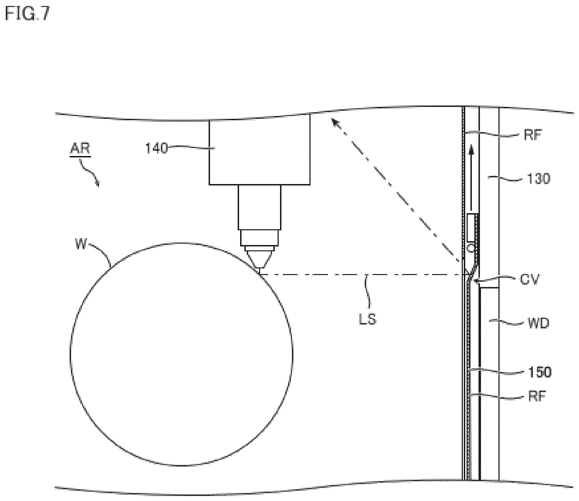

Next, Variation 2 of the additive manufacturing apparatus 100 will be described with reference to FIGS. 6 and 7. FIG. 6 is a diagram showing a portion of the aforementioned cover body 130 from the machining area AR side. FIG. 7 is a diagram showing a cross section of the additive manufacturing apparatus 100 along a vertical plane orthogonal to the window WD.

In this variation, a portion or the entirety of the reflector RF is inclined with respect to the vertical direction. The vertical direction refers to a direction orthogonal to the horizontal plane. In the example shown in FIG. 6, an inclined portion CV is formed in a portion of the reflector RF.

When the angle of incidence of the laser beam LS on the reflector RF is 0°, the outbound path of the laser beam LS from the laser head 140 to the reflector RF may coincide with the return path after the laser beam LS is reflected by the reflector RF, and the laser beam LS may return to the laser head 140. As a result, the laser head 140 may be damaged.

In this example, by forming the inclined portion CV in the reflector RF, it may be possible to reduce the possibility that the angle of incidence of the laser beam LS on the reflector RF will be 0°. As a result, damage to the laser head 140 may be prevented.

Although one inclined portion CV is formed in the reflector RF in the examples in FIGS. 6 and 7, a plurality of inclined portions CV may be formed in the reflector RF. Although the inclined portion CV is formed only in the shutter 150 in the example shown in FIGS. 6 and 6, the inclined portion CV may be formed in the reflector RF provided in a portion other than the shutter 150. The range in the up-down direction where the inclined portion CV is formed may be set based on, for example, the size of the workpiece W that can be machined. That is, the range of the inclined portion CV in the up-down direction may be determined in accordance with the minimum and maximum diameters of a cylindrical workpiece W that can be attached to the workpiece spindle 22. The lower end side of the inclined portion CV may be determined by the height of an irradiation point on the workpiece W where the angle of incidence of the laser beam LS on the workpiece W with the minimum diameter is 45°, and the upper end side of the inclined portion CV may be determined by the height of an irradiation point on the workpiece W where the angle of incidence of the laser beam LS on the workpiece W with the maximum diameter is 45°.

The inclination angle formed between the vertical direction and the inclined portion CV may have any magnitude. As an example, the inclined portion CV is inclined such that the laser beam LS is reflected toward the ceiling side of the cover body 130. As another example, the inclined portion CV is inclined such that the laser beam LS is reflected toward the floor side of the cover body 130. As another example, the inclined portion CV is inclined such that the laser beam LS is reflected toward a side surface of the cover body 130.

Some additive manufacturing apparatuses 100 are capable of performing not only additive manufacturing on a workpiece, but also subtractive manufacturing on the workpiece. Such an additive manufacturing apparatus 100 performs subtractive manufacturing on the workpiece while discharging a coolant onto the workpiece. The discharged coolant flows toward the floor surface side of the cover body 130. Therefore, if the reflector RF is inclined such that the laser beam LS is reflected toward the floor side of the cover body 130, the laser beam LS is more likely to travel toward the coolant. This allows the energy of the laser beam LS to be absorbed by the coolant, preventing the laser beam LS from being reflected multiple times within the machining area AR. As a result, it is possible to suppress damage to objects in the machining area AR caused by the laser beam LS.

### <G. Coolant mechanism>

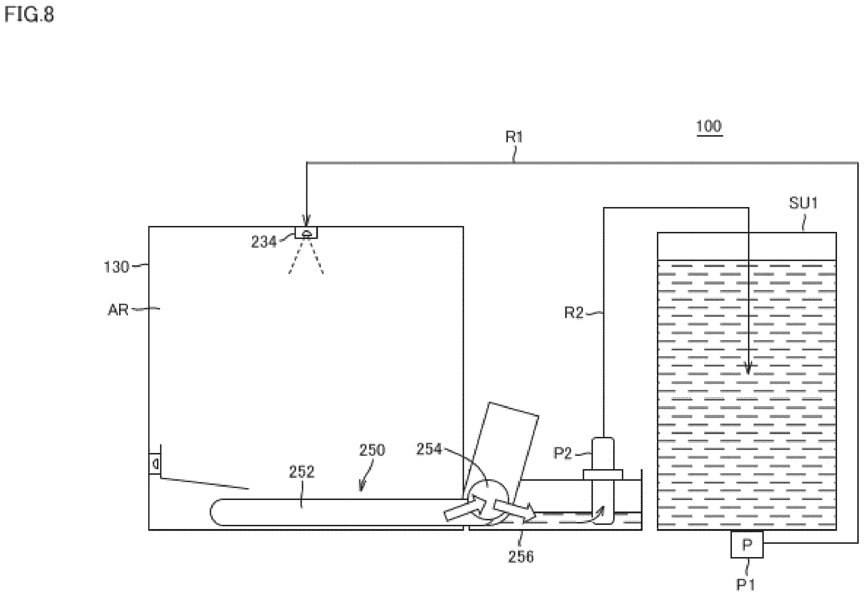

Next, a coolant mechanism provided in the additive manufacturing apparatus 100 will be described with reference to FIG. 8. FIG. 8 is a schematic diagram showing an example of the coolant mechanism provided in the additive manufacturing apparatus 100.

A coolant discharge mechanism 234 is provided on the ceiling of the cover body 130. As a result, the discharge mechanism 234 discharges the coolant from the ceiling of the cover body 130 into the machining area AR.

More specifically, the discharge mechanism 234 is connected to a storage unit SU1 through a flow path R1. The storage unit SU1 is a tank for storing the coolant. The coolant stored in the storage unit SU1 is pumped by a pump P1 to the flow path R1 and discharged from the discharge mechanism 234 to the workpiece or the like.

The machining area AR is provided with a chip conveyor 250. The coolant discharged from the discharge mechanism 234 is collected by the chip conveyor 250 together with chips from the workpiece.

The chip conveyor 250 includes a tank 252, a filtering mechanism 254, and a tank 256. The coolant discharged into the machining area AR flows into the tank 252. The inclined portion CV (see FIGS. 6 and 7) formed on the reflector RF described above may be inclined such that the laser beam LS is reflected by the coolant in the tank 252.

The coolant collected in the tank 252 is sent to the filtering mechanism 254 by a transport mechanism such as a conveyor. The filtering mechanism 254 is configured to capture foreign matter such as cutting chips of the workpiece from the coolant. The coolant that has passed through the filtering mechanism 254 is discharged into the tank 256.

The tank 256 is provided with a pump P2. The pump P2 suctions the coolant stored in the tank 256 and pumps the coolant to a flow path R2. The coolant is sent to the storage unit SU1 through the flow path R2.

As described above, the coolant circulates within the additive manufacturing apparatus 100 in the following order: storage unit SU1 → flow path R1 → discharge mechanism 234 → machining area AR → chip conveyor 250 → flow path R2 → storage unit SU1.

Although an example in which the coolant discharge mechanism 234 is provided on the ceiling of the cover body 130 has been described above, the coolant discharge mechanism 234 may be provided in other portions. As an example, the coolant discharge mechanism 234 may be provided on the tool spindle 30. The discharge mechanism 234 may be of a side-through type in which a coolant passes through a housing of the tool spindle 30 and is discharged from an end face of the tool spindle 30, or of a center-through type in which the coolant passes through the center of the spindle and is discharged from a cutting edge of the tool.

### <H. Drive mechanism of additive manufacturing apparatus 100>

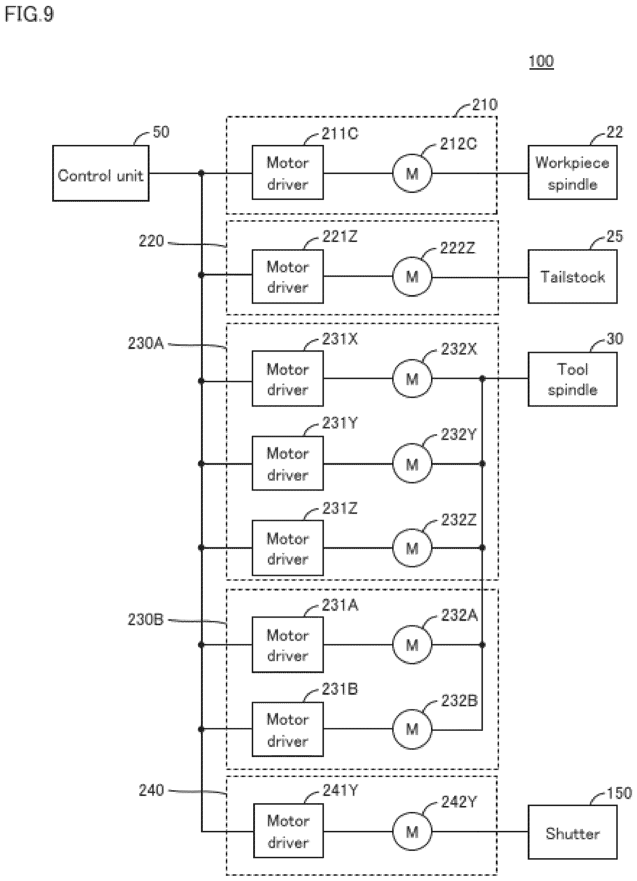

Next, the drive mechanism of the additive manufacturing apparatus 100 will be described with reference to FIG. 9. FIG. 9 is a diagram showing an example of the drive mechanism of the additive manufacturing apparatus 100.

For convenience in the description, the axis direction of the workpiece spindle 22 will also be referred to as the "Z-axis direction" below. The Z-axis direction corresponds to the direction of an axis AX1 shown in FIG. 2. Also, the direction that is one direction on the horizontal plane and is orthogonal to the Z-axis direction will also be referred to as the "X-axis direction". The X-axis direction corresponds to a direction from the window WD toward the machining area AR. The direction orthogonal to both the X-axis direction and the Z-axis direction will also be referred to as the "Y-axis direction". The Y-axis direction corresponds to the vertical direction.

As shown in FIG. 9, the additive manufacturing apparatus 100 includes a control unit 50, drive units 210, 220, 230A, 230B, and 240.

The control unit 50 controls various devices in the additive manufacturing apparatus 100. The control unit 50 may have any device configuration. The control unit 50 may be constituted by a single control unit, or may be constituted by a plurality of control units. In one example, the control unit 50 includes at least one of a CNC (Computer Numerical Control) and a PLC (Programmable Logic Controller).

The drive unit 210 is a drive mechanism for driving the workpiece spindle 22 to rotate. The drive unit 210 may be constituted by a single drive unit, or may be constituted by a plurality of drive units. In the example shown in FIG. 9, the drive unit 210 is constituted by a motor driver 211C and a motor 212C.

The motor driver 211C successively receives input of target rotation angles or target rotation speeds from the control unit 50, and outputs a current according to the target rotation angles or the target rotation speeds to the motor 212C. As a result, the workpiece held by the workpiece spindle 22 rotates around the Z-axis direction as the rotation center. The motor 212C may be an AC motor, may be a stepping motor, may be a servo motor, or may be another type of motor.

The drive unit 220 is a drive mechanism for driving the tailstock 25. The drive unit 220 may be constituted by a single drive unit, or may be constituted by a plurality of drive units. In the example shown in FIG. 9, the drive unit 220 is constituted by a motor driver 221Z and a motor 222Z.

The motor driver 221Z successively receives input of target positions from the control unit 50, and outputs a current according to the target positions to the motor 222Z. As a result, the motor 222Z moves the tailstock 25 to any position in the Z-axis direction. The motor 222Z may be an AC motor, may be a stepping motor, may be a servo motor, or may be another type of motor.

The drive unit 230A is a drive mechanism for moving the position of the tool spindle 30. The above-described laser head 140 is driven by being attached to the tool spindle 30. The drive unit 230A may be constituted by a single drive unit, or may be constituted by a plurality of drive units. In the example shown in FIG. 9, the drive unit 230A is constituted by motor drivers 231X to 231Z and motors 232X to 232Z.

The motor driver 231X successively receives input of target positions from the control unit 50, and outputs a current according to the target positions to the motor 232X. As a result, the motor 232X drives the tool spindle 30 to any position in the X-axis direction. The motor 232X may be an AC motor, may be a stepping motor, may be a servo motor, or may be another type of motor.

The motor driver 231Y successively receives input of target positions from the control unit 50, and outputs a current according to the target positions to the motor 232Y. As a result, the motor 232Y drives the tool spindle 30 to any position in the Y-axis direction. The motor 232Y may be an AC motor, may be a stepping motor, may be a servo motor, or may be another type of motor.

The motor driver 231Z successively receives input of target positions from the control unit 50, and outputs a current according to the target positions to the motor 232Z. As a result, the motor 232Z moves the tool spindle 30 to any position in the Z-axis direction. The motor 232Z may be an AC motor, may be a stepping motor, may be a servo motor, or may be another type of motor.

The drive unit 230B is a drive mechanism for driving the tool spindle 30 to rotate. The drive unit 230B may be constituted by a single drive unit, or may be constituted by a plurality of drive units. In the example shown in FIG. 9, the drive unit 230B is constituted by motor drivers 231A and 231B and motors 232A and 232B.

The motor driver 231A successively receives input of target rotation angles or target rotation speeds from the control unit 50, and outputs a current according to the target rotation angles or the target rotation speeds to the motor 232A. The motor 232A drives the tool spindle 30 to rotate around the X-axis direction. The motor 232A may be an AC motor, may be a stepping motor, may be a servo motor, or may be another type of motor.

The motor driver 231B successively receives input of target rotation angles or target rotation speeds from the control unit 50, and outputs a current according to the target rotation angles or the target rotation speeds to the motor 232B. The motor 232B drives the tool spindle 30 to rotate around the axial direction of the tool spindle 30 as the rotation center. The motor 232B may be an AC motor, may be a stepping motor, may be a servo motor, or may be another type of motor.

The drive unit 240 is a drive mechanism for driving the shutter 150. The drive unit 240 may be constituted by a single drive unit, or may be constituted by a plurality of drive units. In the example shown in FIG. 9, the drive unit 240 is constituted by a motor driver 241Y and a motor 242Y.

The motor driver 241Y successively receives input of target positions from the control unit 50, and outputs a current according to the target positions to the motor 242Y. As a result, the motor driver 241Y drives the shutter 150 to any position in the Y-axis direction and controls opening and closing of the shutter 150. The motor 242Y may be an AC motor, may be a stepping motor, may be a servo motor, or may be another type of motor.

Although an example has been described above in which the shutter 150 is driven by a motor-driven drive unit 240, the shutter 150 may be driven by other driving mechanisms. As an example, an air cylinder may be used as a drive mechanism for the shutter 150.

### <I. Hardware configuration of control unit 50>

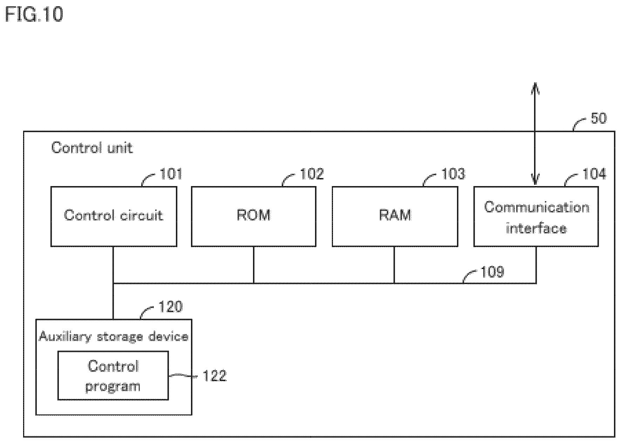

Next, the hardware configuration of the control unit 50 shown in FIG. 9 will be described with reference to FIG. 10. FIG. 10 is a diagram showing an example of the hardware configuration of the control unit 50.

As described above, the control unit 50 may be a CNC or a PLC. FIG. 10 shows the hardware configuration in the case where the control unit 50 is a CNC.

The control unit 50 includes, for example, a control circuit 101, a ROM (Read Only Memory) 102, a RAM (Random Access Memory) 103, a communication interface 104, and an auxiliary storage device 120. These components are connected to an internal bus 109.

The control circuit 101 is constituted by, for example, at least one integrated circuit. The integrated circuit may be constituted by, for example, at least one CPU (Central Processing Unit), at least one GPU (Graphics Processing Unit), at least one ASIC (Application Specific Integrated Circuit), at least one FPGA (Field Programmable Gate Array), or a combination of them.

The control circuit 101 controls the operation of the control unit 50 by executing various programs, such as a control program 122. The control program 122 is a program for realizing various processes mentioned in this specification. Upon receiving an execution command for the control program 122, the control circuit 101 reads the control program 122 from the ROM 102 to the RAM 103. The RAM 103 functions as a working memory and temporarily stores various types of data necessary for executing the control program 122.

The communication interface 104 is an interface for realizing communication with various devices. The additive manufacturing apparatus 100 communicates, for example, via the communication interface 104, with various drive units (e.g., the above-described drive units 210, 220, 230A, 230B, 240, and the like) for realizing additive manufacturing of a workpiece.

The auxiliary storage device 120 is a storage medium such as a hard disk or a flash memory, for example. The auxiliary storage device 120 stores the control program 122 and the like. The control program 122 is not limited to being stored in the auxiliary storage device 120, and can also be stored in a storage area (e.g., a cache memory) of the control circuit 101, the ROM 102, the RAM 103, an external device (e.g., a server), or the like.

Furthermore, rather than being a standalone program, the control program 122 may be provided as part of a program. In this case, various types of processing pertaining to the present embodiment are realized in cooperation with the program. Even in the case of such a program that does not include some of the modules, it does not depart from the spirit of the control program 122 pertaining to the present embodiment. Also, some or all of the functions provided by the control program 122 may be realized by dedicated hardware. Furthermore, the control unit 50 may be formed as a so-called cloud service in which at least one server performs a part of the processing of the control program 122.

### <J. Control flow>

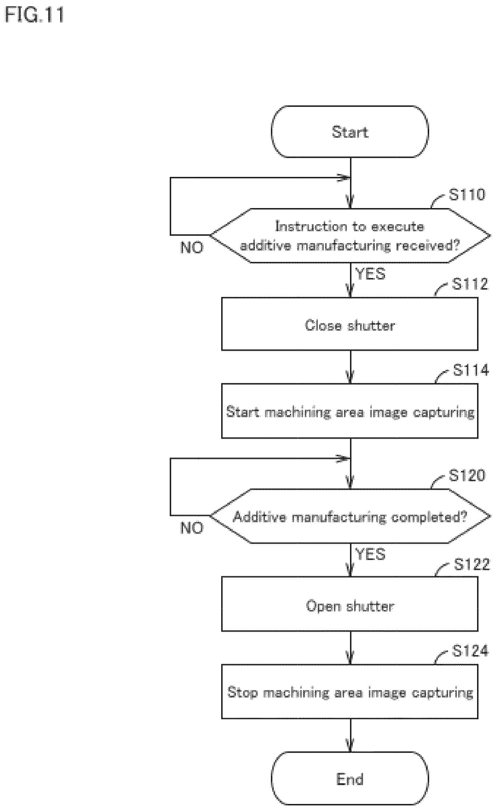

Next, a flow of controlling the additive manufacturing apparatus 100 will be described with reference to FIG. 11. FIG. 11 is a flowchart showing a flow of an additive manufacturing process performed by the additive manufacturing apparatus 100.

The processing shown in FIG. 11 is realized by the control unit 50 of the additive manufacturing apparatus 100 executing the control program 122 described above. In other aspects, part or all of the processing may be executed by circuit elements or other hardware.

In step S110, the control unit 50 determines whether or not an instruction to execute additive manufacturing has been received. An instruction to execute additive manufacturing is, for example, a command to attach the laser head 140 to the tool spindle 30, or a command to move the tool spindle 30 to which the laser head 140 is attached before the laser beam LS is emitted. If the control unit 50 determines that the instruction to execute additive manufacturing has been accepted (YES in step S110), the control unit 50 switches the control to step S112. In the other case (NO in step S110), the control unit 50 executes the processing of step S110 again.

In step S112, the control unit 50 outputs an instruction for closing the above-described shutter 150 to the drive unit 240 (see FIG. 9). As a result, the shutter 150 is driven by the drive unit 240 to the closed state where the shutter 150 covers the window WD.

In step S114, the control unit 50 causes the cameras 152 to start to perform image capturing (see FIG. 5), and displays images that represent the machining area AR on the display unit of the additive manufacturing apparatus 100.

In step S120, the control unit 50 determines whether or not additive manufacturing has been completed. As an example, the control unit 50 determines that the additive manufacturing of the workpiece is completed, based on the completion of the execution of the additive manufacturing program. In the case of determining that additive manufacturing has been completed (YES in step S120), the control unit 50 switches the control to step S122. In the other case (NO in step S120), the control unit 50 returns the control to step S120.

In step S122, the control unit 50 outputs an instruction for opening the shutter 150 to the drive unit 240 (see FIG. 9). As a result, the shutter 150 is driven by the drive unit 240 to the open state where the shutter 150 does not cover the window WD.

In step S124, the control unit 50 causes the cameras 152 to stop performing image capturing.

Note that although an example has been described in which image capturing processing performed by the cameras 152 on the machining area AR is executed only during additive manufacturing, the image capturing processing may be executed not only during additive manufacturing but also at times other than the additive manufacturing.

The embodiments disclosed herein are intended to be considered to be illustrative in all respects and not restrictive. The scope of the present invention is indicated by the claims rather than the above description, and it is intended that equivalent meanings and all changes within the scope of the claims are included.

### List of Reference Numerals

- 11: Bed
- 22: Workpiece spindle
- 23: Chuck mechanism
- 25: Tailstock
- 30: Tool spindle
- 50: Control unit
- 100: Additive manufacturing apparatus
- 101: Control circuit
- 102: ROM
- 103: RAM
- 104: Communication Interface
- 109: Internal bus
- 120: Auxiliary storage device
- 122: Control Program
- 130: Cover body
- 140: Laser head
- 142: Head body
- 146: Laser nozzle
- 150: Shutter
- 152: Camera
- 152A: Camera
- 152B: Camera
- 152C: Camera
- 154: Cutout portion
- 200: Operation panel
- 210: Drive unit
- 211C: Motor driver
- 212C: Motor
- 220: Drive unit
- 221Z: Motor driver
- 222Z: Motor
- 230A: Drive unit
- 230B: Drive unit
- 231A: Motor driver
- 231B: Motor driver
- 231X: Motor driver
- 231Y: Motor driver
- 231Z: Motor driver
- 232A: Motor
- 232B: Motor
- 232X: Motor
- 232Y: Motor
- 232Z: Motor
- 234: Discharge mechanism
- 240: Drive unit
- 241Y: Motor driver
- 242Y: Motor
- 250: Chip conveyor
- 252: Tank
- 254: Filtration mechanism
- 256: Tank
- AR: Machining area
- AX1: Axis
- AX2: Axis
- CV: Inclined portion
- DR: Door
- GS: Gas
- LS: Laser beam
- MP: Molten pool
- P1: Pump
- P2: Pump
- PM: Powder material
- R1: Flow path
- R2: Flow path
- RF: Reflector
- SL: Layer
- SU1: Storage unit
- W: Workpiece
- WD: Window

## Claims

1. An additive manufacturing apparatus configured to perform additive manufacturing by supplying a powder material to a workpiece and irradiating the workpiece with a laser beam, the additive manufacturing apparatus comprising:
a cover body defining a machining area in which additive manufacturing is performed on the workpiece;
a window provided in the cover body; and
a shutter provided on a machining area side of the window and configured to be openable and closable with respect to the window,
wherein a reflector configured to reflect the laser beam is provided on a surface on the machining area side of the shutter.

2. The additive manufacturing apparatus according to claim 1, further comprising
a control unit configured to control opening and closing of the shutter,
wherein the control unit executes processing for closing the shutter before additive manufacturing of the workpiece is started.

3. The additive manufacturing apparatus according to claim 2,
wherein the control unit executes processing for opening the shutter after the additive manufacturing of the workpiece is completed.

4. The additive manufacturing apparatus according to any one of claims 1 to 3, further comprising
a camera configured to capture an image of the machining area.

5. The additive manufacturing apparatus according to claim 4,
wherein the reflector has a cutout portion, and
the camera is disposed such that the camera fits into the cutout portion when the shutter is closed.

6. The additive manufacturing apparatus according to any one of claims 1 to 3,
wherein a portion or an entirety of the reflector is inclined with respect to a vertical direction.

7. The additive manufacturing apparatus according to claim 6,
wherein the portion or the entirety of the reflector is inclined such that the laser beam is reflected toward a ceiling side of the cover body.

8. The additive manufacturing apparatus according to claim 6,
wherein the additive manufacturing apparatus is further configured to perform subtractive manufacturing on the workpiece,
the machining area is provided with
a discharge mechanism configured to discharge a coolant onto the workpiece, and
a tank into which the coolant discharged onto the workpiece flows, and
the portion or the entirety of the reflector is inclined such that the laser beam is reflected toward a floor side of the cover body.

9. The additive manufacturing apparatus according to any one of claims 1 to 3,
wherein the reflector is constituted by a copper plate.

10. A method for controlling an additive manufacturing apparatus configured to perform additive manufacturing by supplying a powder material to a workpiece and irradiating the workpiece with a laser beam,
the additive manufacturing apparatus including
a cover body defining a machining area in which additive manufacturing is performed on the workpiece,
a window provided in the cover body, and
a shutter provided on a machining area side of the window and configured to be openable and closable with respect to the window,
a reflector configured to reflect the laser beam being provided on a surface on the machining area side of the shutter, and
the control method comprising a step of closing the shutter before additive manufacturing of the workpiece is started.

11. A control program for controlling an additive manufacturing apparatus configured to perform additive manufacturing by supplying a powder material to a workpiece and irradiating the workpiece with a laser beam,
the additive manufacturing apparatus including
a cover body defining a machining area in which additive manufacturing is performed on the workpiece,
a window provided in the cover body, and
a shutter provided on a machining area side of the window and configured to be openable and closable with respect to the window,
a reflector configured to reflect the laser beam being provided on a surface on the machining area side of the shutter, and
the control program causing the additive manufacturing apparatus to execute a step of closing the shutter before additive manufacturing of the workpiece is started.
